# EUROPÄISCHE PATENTSCHRIFT

(11) **EP 0 535 478 B1**
(45) Veröffentlichungstag und Bekanntmachung des Hinweises auf die Patenterteilung: **22.05.1996**
(21) Anmeldenummer: 92116065.1
(22) Anmeldetag: 19.09.1992
(51) Int. Cl.: B67D 5/04, B67D 5/14, B67D 5/16, G01G 17/04

(54) **Abgabeeinrichtung für Flüssigkeiten, insbesondere Mineralölprodukte**
Dispenser for liquid products, in particular mineral oil products
Distributeur de produits liquides, notamment d'huile minérale

(30) Priorität: 02.10.1991 DE 9112312 U
(43) Veröffentlichungstag der Anmeldung: 07.04.1993
(73) Patentinhaber: Schäfer, Jürgen F., D-33647 Bielefeld (DE)
(72) Erfinder: Schäfer, Jürgen F., W-4800 Bielefeld 14 (DE); Plehn, Reinhard, W-4815 Schloss Holte/Stukenbrock (DE)

(56) Entgegenhaltungen:
- EP-A- 0 069 036
- WO-A-90/14303
- DE-U- 9 001 088
- DE-U- 9 012 900
- DE-U- 9 107 528
- FR-A- 2 505 490
- US-A- 3 128 914
- US-A- 3 720 287

## Beschreibung

Die Erfindung betrifft eine Abgabeeinrichtung für Flüssigkeiten gemäß dem Oberbegriff des Anspruchs 1.

Eine bekannte Abgabeeinrichtung dieser Art dient als Verkaufsstand für Schmierstoffe. Weitere Einzelheiten dieser Einrichtung können der nicht vorveröffentlichten DE-U-9107528.9 entnommen werden.

In dieser Schrift ist konkret nur eine volumetrische Messung offenbart. Das bedeutet, daß entweder für jedes Produkt ein eigenes Meßgerät vorgesehen werden muß oder daß bei nur einem Meßgerät eine gewisse Vermischung der Produkte erfolgt, falls nicht bei jedem Wechsel gespült wird.

Ausgehend von diesem Stand der Technik liegt der Erfindung die Aufgabe zugrunde, dessen Nachteile zu vermeiden, ohne daß darunter die Manipulationssicherheit leidet. Bevorzugte Ausführungsformen der Erfindung sollen eine Ausgabe von vorgegebenen bzw. vorbestimmbaren Flüssigkeitsmengen ermöglichen.

Die Lösung dieser Aufgabe erfolgt mit den Merkmalen des Anspruchs 1. Bevorzugte Ausführungsformen der Erfindung sind in den Unteransprüchen beschrieben.

Eine bei bevorzugten Ausgestaltungen vorgesehene Steuerungseinrichtung über Code-Karten oder dergleichen erlaubt eine manipuliersichere Handhabung ohne absichtlich oder unabsichtlich vorgenommene Fehlzapfungen durch den Kunden.

Nachstehend wird eine bevorzugte Ausführungsform der Erfindung anhand der Zeichnung im einzelnen beschrieben. Es zeigen:
- Figur 1 -: eine schematische Frontansicht der Abgabeeinrichtung,
- Figur 2 -: eine schematische senkrechte Schnittdarstellung entlange Ebene II-II in Figur 1,

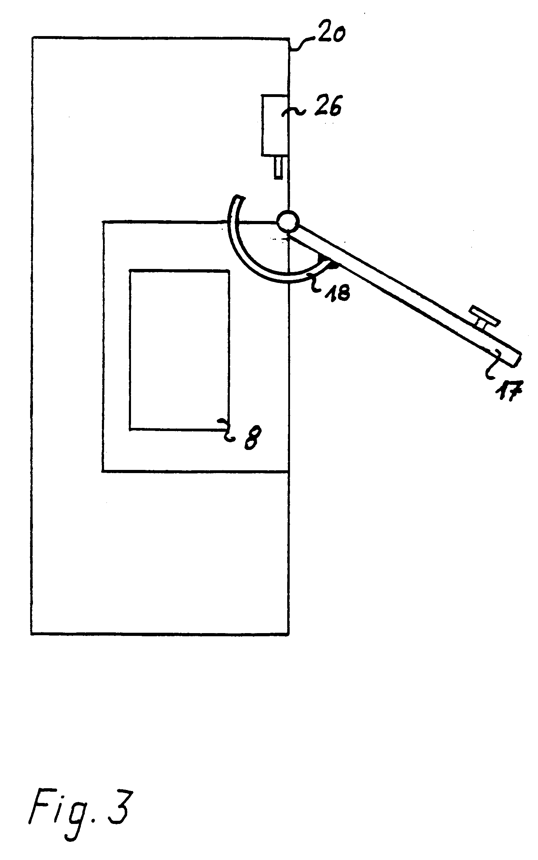

- Figur 3 -: einen horizontalen Schnitt entlang Ebene III-III in Figur 2,
- Figur 4 -: eine teilweise geschnittene Darstellung der Zapfstelle,
- Figur 4a -: einen Schnitt entlang Ebene IVa-IVa gemäß Figur 4.

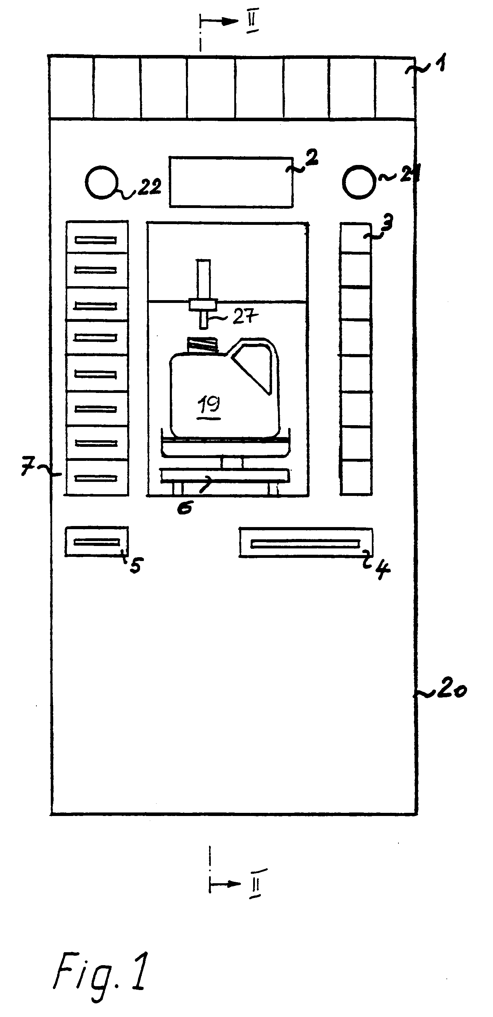

Figur 1 zeigt in der Frontansicht der Abgabeeinrichtung eine Anzeigentafel 1, eine Gewichtsanzeige 2, eine Druckschalterleiste 3 und einen Papierspender 4. Neben dem Papierspender 4 ist eine Ausgabe 5 für Kassenbons vorgesehen. Eine Wägeeinrichtung 6 ist unterhalb der Zapfstelle vorgesehen, die einen Auslauf 27 aufweist. Unterhalb des Auslaufs 27 ist ein Aufnahmebehälter 19 angeordnet, der als Mehrwegkanister ausgebildet ist. Das Gehäuse der Abgabeeinrichtung ist mit 20 bezeichnet. In der Frontseite des Gehäuses 20 sind ferner noch eine rote Anzeigelampe 21 und eine grüne Anzeigelampe 22 vorgesehen.

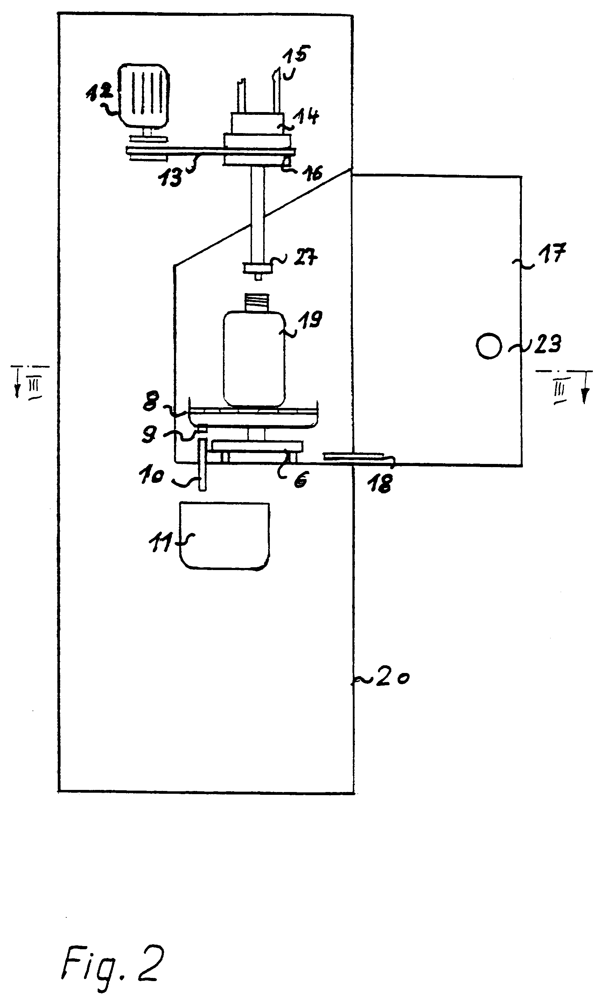

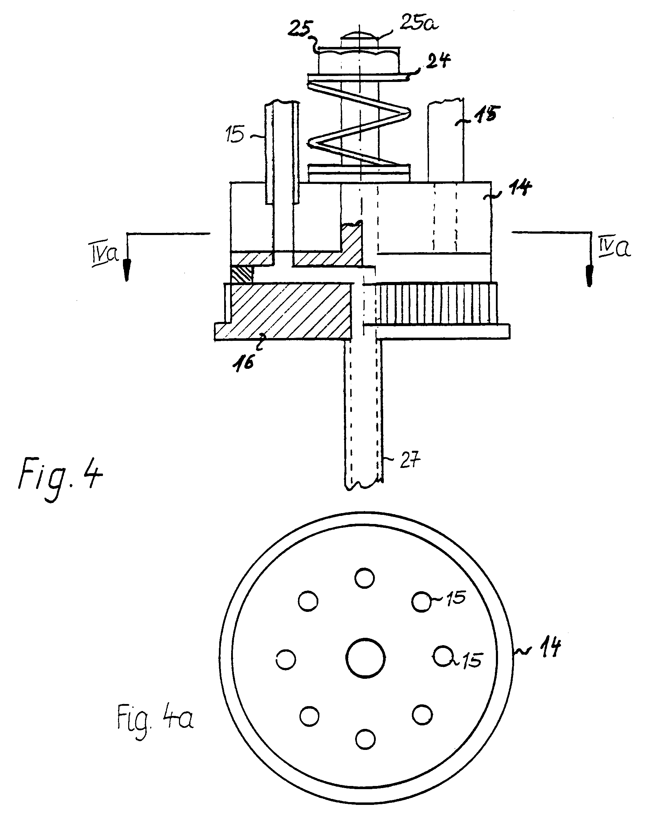

Die Schnittansicht in Figur 2 zeigt weitere Einzelheiten:
Mehrere Leitungen 15, die zu unterschiedlichen, nicht dargestellten Vorratsbehältern mit unterschiedlichen flüssigen Produkten führen, münden in einem Oberteil 14 eines Verteilers. Das Oberteil 14 wirkt mit dem Unterteil 16 des Verteilers zusammen. Das Unterteil 16 kann mittels eines Zahnriemens 13, der von einem als Schrittmotor ausgebildeten Antriebsmotor angetrieben wird, um eine vertikale Achse verdreht werden. Einzelheiten sind in Figuren 4 und 4a dargestellt.

Der Auslauf 27 endet oberhalb des Aufnahmebehälters 19, der auf der Waagschale 8 der Wägeeinrichtung 6 abgestellt ist. Die Waagschale 8 besitzt ein Magnetventil, das überlaufendes Produkt in einen Ablauf 10 freigibt. Der Ablauf 10 mündet in einer als Sammelschale ausgebildeten Sammeleinrichtung.

Vor der Zapfstelle ist eine schwenkbare Tür 17 angeordnet, die durchsichtig ausgebildet ist. An dieser Tür 17 ist ein Bügel 18 befestigt. Der Bügel 18 wirkt mit dem Endschalter 26 zusammen und löst bei geschlossener Tür 17 einen Kontakt aus, der die grüne Anzeigelampe 22 aufleuchten läßt. Sobald dieser Kontakt hergestellt ist, ist auch der Kontakt für die Wägeeinrichtung gegeben. Es wird die Tara durch die Wägeeinrichtung elektronisch festgestellt und danach wählt der Kunde die gewünschte Flüssigkeit auf der Druckschalterleiste 3 aus.

Der Schrittmotor 12 stellt über den Zahnriemen 13 das Unterteil des Verteilers auf die gewünschte Flüssigkeit ein, die dann über die entsprechende Leitung 15 zunächst durch das Oberteil 14 und danach durch das Unterteil 16 über den Auslauf 27 in den Aufnahmebehälter 19 einläuft.

Das abgefüllte Gewicht bzw. die abgefüllte Menge wird dem Kunden auf der Gewichtsanzeige 2 angezeigt.

Sobald der Abfüllvorgang beendet ist, öffnet der Kunde die Tür 17 mit der Folge, daß der Endschalter 26 betätigt wird. Durch den entsprechenden Kontakt wird der Druck des Kassenbons veranlaßt und der Kassenbon aus der Ausgabe 7 ausgegeben.

Der Kassenbon enthält sowohl Tara-Gewicht als auch das Gewicht oder die Menge der abgefüllten Flüssigkeit, außerdem noch die Bezeichnung oder Nummer der ausgewählten Flüssigkeit. Gleichzeitig wird aus der Ausgabeeinrichtung 7 ein Selbstklebeetikett ausgegeben, das die maßgeblichen Daten enthält und auf den Aufnahmebehälter 19 aufgeklebt werden kann.

Eventuell überlaufende Flüssigkeit wird in der Waagschale 8 aufgefangen. Das Magnetventil ist während des Wägevorgangs geschlossen.

Nach dem Wägevorgang und dem Öffnen der Tür 17 wird das Magnetventil 9 geöffnet und die übergelaufene Flüssigkeit kann über den Ablauf 10 in das Sammelgefäß 11 ablaufen.

Figuren 4 und 4a zeigen die Abgabeeinrichtung in größerem Detail. Das um eine vertikale Achse drehbare Unterteil 16 wird mittels Feder 24 und Mutter 25, welche auf den Bolzen 25a aufgeschraubt wird, gegen das Oberteil gezogen.

Mit 23 ist an der Tür 17 ein Handgriff bezeichnet.

## Patentansprüche

1. Abgabeeinrichtung für Flüssigkeiten, insbesondere für Mineralölprodukte, mit mehreren Vorratsbehältern, die über Leitungen mit einer gemeinsamen Zapfstelle verbunden sind, und mit Mitteln zur Auswahl einer bestimmten Flüssigkeit, dadurch gekennzeichnet, daß unterhalb der Zapfstelle eine Wageeinrichtung (6) angeordnet ist, die zum Bestimmen des Gewichts eines befüllten bzw. unbefüllten Aufnahmebehälters (19) für die ausgewählte Flüssigkeit ausgebildet ist, und daß vor der Zapfstelle eine die Zapfstelle wahlweise freigebende bzw. den Zugang zur Zapfstelle sperrende durchsichtige Abdeckeinrichtung (17) angeordnet ist, die mit einem Schalter (26) derart zusammenwirkt, daß beim Schließen der Abdeckeinrichtung (17) die Wägeeinrichtung (6) eingeschaltet wird, welche zunächst die Tara und danach das Gewicht zugeflossener Flüssigkeit ermittelt, und beim Öffnen der Abdeckeinrichtung ein Ausdruck der Wägeergebnisse bewirkt wird.

2. Abgabeeinrichtung nach Anspruch 1,
dadurch gekennzeichnet,
daß die unterschiedlichen Leitungen (15) mittels eines Antriebsmotors (12) mit dem gemeinsamen Auslauf (27) verbindbar sind.

3. Abgabeeinrichtung nach Anspruch 1 oder 2,
dadurch gekennzeichnet,
daß in jeder der zur Zapfstelle führenden Leitungen (15) jeweils eine Dichtemeßeinrichtung für die Flüssigkeit angeordnet ist.

4. Abgabeeinrichtung nach einem der Ansprüche 1 bis 3,
dadurch gekennzeichnet,
daß unterhalb der Zapfstelle eine Sammeleinrichtung (11) für eventuell überlaufende Flüssigkeit angeordnet ist.

5. Abgabeeinrichtung nach einem der Ansprüche 1 bis 4,
dadurch gekennzeichnet,
daß sie verschiedene Drucktasten aufweist, die jeweils unterschiedlichen Flüssigkeiten zugeordnet sind, wobei die Drucktasten zur elektrischen und/oder pneumatischen Steuerung von in den zur Zapfstelle führenden Leitungen (15) angeordneten Absperrorganen ausgebildet sind.

6. Abgabeeinrichtung nach einem der Ansprüche 1 bis 4,
dadurch gekennzeichnet,
daß sie eine Steuerungseinrichtung für Mengen und Sorten der Flüssigkeiten aufweist, die mittels Code-Karten betätigbar ist.

7. Abgabeeinrichtung nach einem der Ansprüche 1 bis 6,
dadurch gekennzeichnet,
daß sie eine Ausgabeeinrichtung (7) für ein Selbstklebeetikett aufweist, das die ausgedruckten Daten enthält.

## Claims

1. Dispensing device for liquids, in particular for mineral oil products, with several supply containers which are linked via pipelines to a common filling point and with facilities for selecting a particular liquid, characterised by the feature that a weighing device (6) is located below the filling point designed to determine the weight of a full or empty take-up container (19) for the selected liquid and that a transparent covering device (17) is located in front of the filling point to optionally give access to or deny access to the filling point, whereby the covering device (17) is coupled to a switch (26) such that on closing the covering device (17) the weighing device (6) is switched on to first determine the initial weight and then the weight of liquid filled in, and opening of the covering device initiates a print - out of the weighing results.

2. Dispensing device according to Claim 1,
characterised by the feature that
the different pipelines (15) can be connected with the aid of a driving motor (12) to the common run-out (27).

3. Dispensing device according to Claim 1 or 2,
characterised by the feature that
a density measuring device for the liquid is located in each one of the pipelines (15) leading to the filling point.

4. Dispensing device according to one of the Claims 1 to 3,
characterised by the feature that
a collecting device (11) is located below the filling point to catch any overflowing liquid.

5. Dispensing device according to one of the Claims 1 to 4,
characterised by the feature
that it is equipped with various pushbuttons which are assigned to the respective liquids, whereby the pushbuttons are designed as electrical and/or pneumatic control elements for the shut-off valves associated with the pipelines (15) leading to the filling point.

6. Dispensing device according to one of the Claims 1 to 4,
characterised by the feature
that it contains a control facility for quantities and types of liquids which can be operated with code cards.

7. Dipensing device according to one of the Claims 1 to 6,
characterised by the feature
that it is equipped with an output device (7) for a self-adhesive label carrying the printed-out data.

## Revendications

1. Dispositif de distribution pour liquides, notamment pour produits pétroliers, avec plusieurs réservoirs de stockage reliés par des conduites à un distributeur commun, et avec des organes pour la sélection d'un liquide précis, caractérisé par le fait qu'en dessous du distributeur se trouve un dispositif de pesée (6) conçu pour permettre de déterminer le poids d'un récipient d'accueil (19) rempli ou non rempli pour le liquide sélectionné, et par la présence devant le distributeur d'un écran transparent (17) libérant ou empêchant au choix l'accès au distributeur, écran agissant en interdépendance avec un interrupteur (26) de telle sorte que la fermeture de l'écran (17) connecte le dispositif de pesée (6), qui détermine tout d'abord la tare, puis le poids du liquide introduit, et que l'ouverture de l'écran provoque une impression des résultats de pesée.

2. Dispositif de distribution selon la spécification 1,
caractérisé par le fait
que les diverses conduites (15) sont raccordables à la sortie commune (27) à l'aide d'un moteur d'entraînement (12).

3. Dispositif de distribution selon la spécification 1 ou 2,
caractérisé par le fait
que dans chacune des conduites (15) conduisant au distributeur se trouve un hygrobaroscope.

4. Dispositif de distribution selon l'une des spécifications 1 à 3,
caractérisé par le fait
qu'en dessous du distributeur commun se trouve un dispositif collecteur (11) pour le liquide qui déborderait éventuellement.

5. Dispositif de distribution selon l'une des spécifications 1 à 4,
caractérisé par le fait
qu'il présente diverses touches à presser, respectivement attribuées à divers liquides, ces touches à pression étant conçues pour la commande électrique et/ou pneumatique des organes d'obturation correspondant aux conduites (15) menant au distributeur.

6. Dispositif de distribution selon l'une des spécifications 1 à 4,
caractérisé par le fait
qu'il présente un dispositif de détermination pour les quantités et les catégories de liquides, qui s'actionne à l'aide de cartes-codes.

7. Dispositif de distribution selon l'une des spécifications 1 à 6,
caractérisé par le fait
qu'il présente un dispositif d'émission (7) pour une étiquette autocollante qui contient les données imprimées.
